# EUROPÄISCHE PATENTSCHRIFT

(11) **EP 0 992 398 B1**
(45) Veröffentlichungstag und Bekanntmachung des Hinweises auf die Patenterteilung: **17.07.2002**
(21) Anmeldenummer: 99118475.5
(22) Anmeldetag: 17.09.1999
(51) Int. Cl.: B60R 5/04

(54) **Laderaumabdeckung für Kraftfahrzeuge**
Luggage compartment cover for motor vehicles
Couvercle pour le compartiment à bagages de véhicules

(30) Priorität: 10.10.1998 DE 19846823
(43) Veröffentlichungstag der Anmeldung: 12.04.2000
(73) Patentinhaber: DaimlerChrysler AG, 70567 Stuttgart (DE)
(72) Erfinder: Bollmann, Jürgen, 75328 Schömberg (DE); Greiner, Ferdinand, 72218 Wildberg (DE); Möller, Hans-Günt., 71134 Aidlingen (DE)

(56) Entgegenhaltungen:
- GB-A- 2 295 992
- GB-A- 2 334 931
- US-A- 4 127 301

## Beschreibung

Die Erfindung betrifft eine Laderaumabdeckung für einen Laderaum eines Kraftfahrzeuges, insbesondere eines Kombinationskraftwagens, nach dem Oberbegriff des Patentanspruch 1.

Eine solche Laderaumabdeckung für einen Laderaum eines Kraftfahrzeuges, von der im Oberbegriff des Patentanspruchs 1 ausgegangen wird, ist aus der EP 0 066 514 B1 bekannt und betrifft ein faltbares Gepäckablagebrett für den Laderaum eines Kraftfahrzeuges. Dieses Gepäckablagebrett trennt in einer etwa horizontalen Abdeckstellung den Laderaum von der Fahrgastzelle ab und umfaßt zwei aneinander angelenkte Abdeckteile, die einstükkig miteinander durch ein dünnes biegsames Teil, welches ein Scharnier bildet, verbunden sind. Wenigstens ein Abdeckelement ist dadurch aus der Abdeckstellung um eine sich etwa in Fahrzeugquerrichtung erstreckende, durch das Scharnier gebildete Schwenkachse nach oben in eine Entladestellung verschwenkbar. Das Verschwenken des Abdeckelements erfolgt mit Hilfe eines das Abdeckelement mit der Hecktüre verbindenden Verbindungsglieds, wodurch beim Öffnen der Hecktüre in einer Richtung nach oben auch das Abdeckelement aus der Abdeckstellung nach oben in die Be- und Entladestellung verschwenkt wird.

Die Abdeckteile dieses Gepäckablagebretts sind allerdings so über dem Laderaum angeordnet und so verschwenkbar, daß die Beladung des Laderaumes insbesondere mit größeren Gütern kaum möglich ist.

Eine weitere gattungsgemäße Laderaumabdeckung zeigt die DE 29 21 813 A1, die eine Faltverkleidung für den Stauraum eines Kraftfahrzeuges betrifft. Diese Faltverkleidung umfaßt zwei gelenkig miteinander verbundene Abdeckplatten, die in etwa horizontaler Abdeckstellung den Laderaum von der Fahrgastzelle abtrennen. Die hintere der beiden Abdeckplatten ist um eine sich etwa in Fahrzeugquerrichtung erstreckende Schwenkachse nach oben in eine Entladestellung verschwenkbar. An der ebenfalls nach oben verschwenkbaren Hecktüre ist ein Verbindungsglied vorgesehen, mit dem beim Öffnen der Hecktüre die hintere Abdeckplatte in ihre Entladestellung nach oben gebracht wird. Auch bei den hier gezeigten Abdeckplatten ist das Beladen des Laderaumes mit größeren und sperrigen Waren relativ umständlich.

Aus der US 5 209 543 A ist weiterhin eine Vorrichtung zum Öffnen des Dachs eines Kleinlastwagens bekannt, dessen Laderaum im Bereich der Pritsche von einem Kastenaufbau umschlossen ist. Das Dach des Kastenaufbaus ist im wesentlichen von zwei türartigen Abdeckteilen gebildet, die durch einen fahrzeugmittig und in Fahrzeuglängsrichtung verlaufenden Trennfalz voneinander unterteilt sind und deren jeweilige Schwenkachse außenseitig in Fahrzeuglängsrichtung verläuft. Zum Beladen der Pritsche mit sperrigen Gütern sind die beiden Abdeckteile mit Hilfe der genannten Vorrichtung in eine geöffnete Stellung verschwenkbar.

Aufgabe der Erfindung ist es, eine Laderaumabdeckung für einen Laderaum eines Kraftfahrzeuges der im Oberbegriff des Patentanspruchs 1 angegebenen Art zu schaffen, die zur Beladung des Laderaumes mit sperrigen Gütern leicht handhabbar ist.

Diese Aufgabe wird erfindungsgemäß durch eine Laderaumabdeckung für einen Laderaum eines Kraftfahrzeuges mit den Merkmalen des Patentanspruchs 1 gelöst.

In vorteilhafter Weise erstreckt sich bei der Laderaumabdeckung nach der Erfindung die Schwenkachse, um die das Abdeckelement aus seiner Abdeckstellung in seine Be- und Entladestellung nach oben verschwenkt werden kann, etwa in Fahrzeuglängsrichtung, so daß das längs zur Fahrtrichtung verschwenkbare Abdeckelement nach oben in die Be- und Entladestellung verschwenkbar ist, bis es je nach Dimensionierung im Bereich des Fahrzeughimmels oder aber im Bereich einer C-Säule bzw. einer eventuellen D-Säule seine maximal mögliche und somit steilste Verschwenkmöglichkeit einnimmt.

Beim Be- oder Entladen steht dadurch auf der der Schwenkachse abgewandten Seite des Abdeckelements ein Bereich des Laderaums zur Verfügung, der in seiner Höhe bis an den Fahrzeughimmel ragt und sich in seiner Breite zwischen der hinteren Ladekante und der dem Laderaum zugewandten Seite der Fondlehne erstreckt. In diesem sehr großen Raum können sperrige Güter insbesondere in Fahrzeuglängsrichtung auf vorteilhafte Weise eingeladen oder entnommen werden, wobei auch an der dem Laderaum zugewandten Seite der Fondlehne die gesamte Fahrzeughöhe zu Verfügung steht.

Vorteilhafte Ausführungsformen der Laderaumabdeckung für einen Laderaum eines Kraftfahrzeuges mit zweckmäßigen Weiterbildungen der Erfindung sind in den Unteransprüchen beschrieben.

So hat es sich in weiterer Ausgestaltung der Erfindung als besonders vorteilhaft erwiesen, wenn die Schwenkachse des Abdekkelements im Bereich des Laderaums in Nähe der Fahrzeugaußenseite verläuft, wodurch sich auf der der Schwenkachse abgewandten Seite ein besonders breiter Bereich zum Beladen des Laderaums mit sperrigen Gütern ergibt.

Besondere Vorteile bietet ein Abdeckelement, das aus zwei Abdeckteilen gebildet ist. Dabei können die beiden Schwenkachsen der Abdeckteile nebeneinander und vorzugsweise parallel zueinander angeordnet sein. Durch die Unterteilung des Abdeckelements ergeben sich zwei Abdeckteile, die in eine besonders steile Be- und Entladestellung bringbar sind und dadurch einen großen Beladeraum für die Transportgüter schaffen.

Bei der Anordnung von zwei Abdeckteilen hat es sich als zudem günstig erwiesen, daß die beiden Schwenkachsen jeweils in Nähe der Fahrzeugaußenseite verlaufen, wodurch die Abdeckteile bis an die C- und gegebenenfalls D-Säule verschwenkt werden können und wiederum einen großen Beladeraum für die Transportgüter schaffen.

Sind das Abdeckelement oder die Abdeckteile mit lösbaren Scharnieren an den Abdeckungsabschnitten angeordnet, so kann entweder ein oder beide Abdeckteile im Bedarfsfall ausgebaut werden.

Zudem kann das Verschwenken des Abdeckelements und der Abdeckteile durch ein besonders einfach herzustellendes und wartungsarmes, mit der Hecktüre verbundenes Verbindungsglied erfolgen oder aber in weiterer Ausgestaltung der Erfindung mit Hilfe von Federelementen, durch die auf besonders komfortable Art die Abdeckteile z.B. getrennt verschwenkt werden können.

In weiterer Ausgestaltung der Erfindung sind die beiden aus dem Fahrzeug entnommenen Abdeckteile schalenförmig ausgebildet und können zu einem Koffer zusammengefügt werden, wodurch sich eine zusätzliche Einsatzmöglichkeit der Abdeckteile ergibt.

Schließlich hat es sich als vorteilhaft erwiesen, daß die zur Anordnung am Fahrzeug vorgesehenen Scharnierhälften an den Abdeckteilen so ausgebildet sind, daß sie gleichzeitig die Scharniere des Koffers bilden und somit die Abdeckteile auf besonders schnelle und einfache Weise mehreren Einsatzmöglichkeiten zur Verfügung stehen.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1: eine Perspektivansicht eines Laderaums eines Kraftwagens mit der erfindungsgemäßen Laderaumabdeckung in ihrer Be- und Entladestellung nach einer bevorzugten Ausführungsform der Erfindung;
- Fig. 2: eine ausschnittweise Perspektivansicht der Lade raumabdeckung gemäß Fig.1;
- Fig. 3: eine weitere Perspektivansicht des Fahrzeugs mit geschlossener Hecktüre und der erfindungsgemäßen Laderaumabdeckung gemäß Fig.1 in ihrer Abdeckstellung;
- Fig. 4: eine perspektivische Seitenansicht des Fahrzeugs mit der erfindungsgemäßen Laderaumabdeckung gemäß Fig.1, deren zwei Abdeckteile aus dem Fahrzeug ausgebaut und zu einem Koffer zusammengefügt sind.

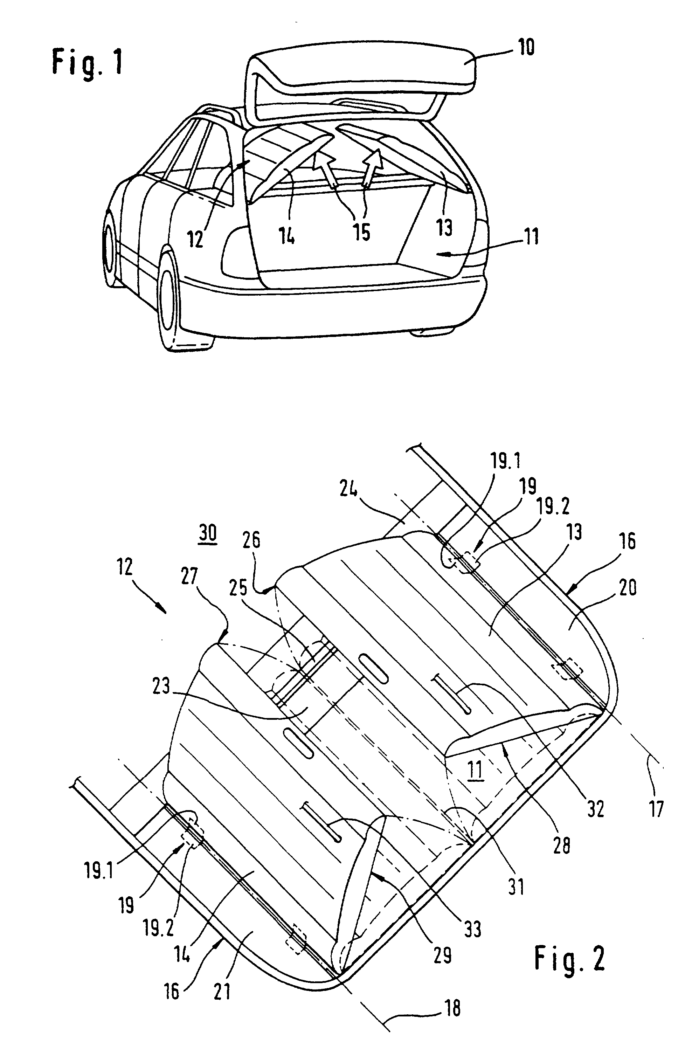

Fig.1 zeigt eine Perspektivansicht eines Kraftwagens mit geöffneter Hecktüre 10, dessen Laderaum 11 eine Laderaumabdeckung aufweist, die als eigensteifes Abdeckelement 12 ausgebildet ist. Das Abdeckelement 12 umfaßt zwei Abdeckteile 13,14, die - wie mit den Pfeilen 15 angedeutet - in ihrer Be- und Entladestellung nach oben in Richtung der hinteren Seitenfenster und der C- und D-Säulen des Fahrzeugs verschwenkbar angeordnet sind.

Fig.2 zeigt in auschnittsweiser Perspektivansicht das Abdeckelement 12 gemäß Fig.1, deren Abdeckteile 13,14 um jeweils eine im Bereich der zugeordneten Fahrzeugaußenseite 16 etwa in Fahrzeuglängsrichtung horizontal verlaufende Schwenkachse 17,18 nach oben in die Be- und Entladestellung verschwenkt sind. Um diese Schwenkbewegung zu ermöglichen, sind die Abdeckteile 13,14 mit Hilfe von lösbaren Scharnieren 19 an einem jeweils zugeordneten, an der Karosserie 20 im Bereich der Fahrzeugaußenseite 16 befestigten festen Abdeckungsabschnitte 20,21 schwenkbar angeordnet. Die Abdeckteile 13,14 sind hier schalenförmig ausgebildet und aus einem Kunststoffmaterial hergestellt. Gleichwohl wäre es auch denkbar, die Abdeckteile 13,14 aus einem Verbundwerkstoff oder einem Metall, insbesondere einem Leichtmetall, zu fertigen. An der Oberseite der beiden Abdeckteile 13,14 ist jeweils ein mit der Hecktüre 10 verbundenes Verbindungsglied 32,33 angeordnet, mit dem die Abdeckteile 13,14 beim Öffnen der Hecktüre 10 in ihre Be- und Entladestellung nach oben verschwenkt werden.

An einer rückwärtigen, dem Laderaum 11 zugewandten Seite 23 einer Fondlehne 24 ist eine Auflageleiste 25 befestigt, die sich zwischen den beiden Schwenkachsen 17,18 in Fahrzeugquerrichtung und etwa horizontal erstreckt. Auf dieser Auflageleiste 25 liegen die beiden Abdeckteile 13,14 in ihrer unteren, etwa horizontalen und gestrichelt angedeuteten Abdeckstellung mit einem jeweiligen vorderen Stirnabschnitt 26,27 entlang der gesamten Länge der Auflageleiste 25 auf. Zudem kann eine zweite, nicht dargestellte Leiste auf der dem Laderaum 11 zugewandten Seite der Hecktüre 10 befestigt sein, die sich auf einer gemeinsamen horizontalen Ebene mit der Auflageleiste 25 sowie in Fahrzeugquerrichtung erstreckt und somit eine weitere Auflagemöglichkeit für einem jeweiligen hinteren Stirnabschnitt 28,29 der beiden Abdeckteile 13,14 bietet.

Die Abdeckteile 13,14 sind an die Abdeckungsabschnitte 20,21 und an die Auflageleiste 25 bzw. die nicht dargestellte Leiste an der Hecktüre in ihrer Kontur angepaßt, so daß sie den Laderaum von der Fahrgastzelle 30 im wesentlichen vollständig abtrennen. Um die Fahrgastzelle 30 staub- und/oder geruchsdicht von dem Laderaum zu trennen, können im Bereich zwischen den Abdeckteilen 13,14 und den Leisten 25 bzw. den Abdeckungsabschnitte 20,21 Dichtungen vorgesehen sein.

Entlang eines Trennfalzes 31, der in Fahrzeuglängsrichtung und etwa in der Mitte des Fahrzeuges verläuft, sind die beiden Abdeckteile 13,14 in ihrer horizontalen und gestrichelt angedeuteten Abdeckstellung voneinander getrennt und aneinander angepaßt. Auch entlang dieses Trennfalzes 31 kann eine Dichtung zwischen den beiden Abdeckteilen 13,14 zur Staub- und Geruchsabdichtung vorgesehen sein.

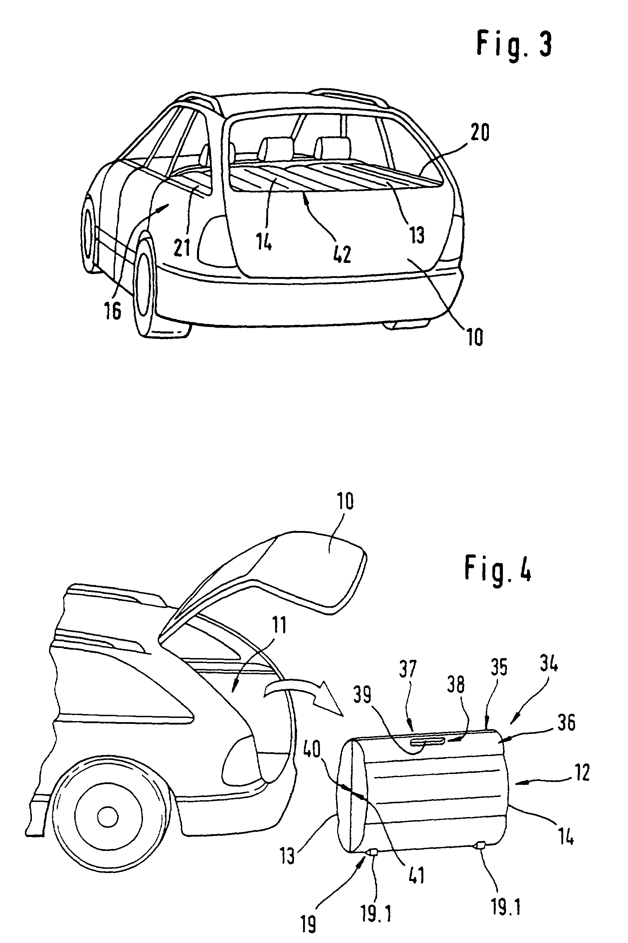

In Fig.3 ist in einer weiteren Perspektivansicht das Abdeckelement 12 gemäß Fig.1 in seiner Abdeckstellung dargestellt, wobei die Abdeckteile 13,14 und die Abdeckungsabschnitte 20,21 eine im wesentlichen etwa horizontale Ebene bilden, die in Höhe einer Bordkante 42 verläuft. Gleichwohl wäre es auch denkbar, daß sich die Abdeckteile 13,14 und die Abdeckungsabschnitte 20,21 in Fahrzeuglängs- oder querrichtung geneigt oberhalb des Laderaums 10 erstrecken.

Fig.4 zeigt eine perspektivische Seitenansicht des Fahrzeuges mit dem Abdeckelement 12 gemäß Fig.1, wobei die beiden schalenförmigen Abdeckteile 13,14 an den lösbaren Scharnieren 19 aus dem Fahrzeug ausgebaut und zu einem Koffer 34 zusammengefügt sind. Dabei sind die Abdeckteile 13,14 an ihren einander zugewandten Stoßflächen 40,41 aneinander angepaßt und so ausgebildet, daß sich ein bündig schließender Koffer 34 mit einer Tragemöglichkeit ergibt. Die lösbaren Scharniere 19 sind - wie in Fig.2 dargestellt - zweiteilig ausgebildet, so daß die Abdeckteile 13,14 mit ersten Scharnierhälften 19.1 an zugeordneten zweiten Scharnierhälften 19.2 an den Abdeckungsabschnitte 21,22 schwenkbar gelagert werden können, um die Schwenkbewegung innerhalb des Fahrzeuges von der Abdeckstellung in die Be- und Entladestellung zu ermöglichen. Außerdem sind die Scharnierhälften 19.1 so ausgebildet und an den Abdeckteilen 13,14 angeordnet, daß sie gemeinsam die Scharniere 19 des Koffers 34 bilden. An den den Scharnieren 19 abgewandten Seiten 35,36 sind die Abdeckteile 13,14 von Grifflöcher 37,38 durchbrochen, die bei zusammengefügten Abdeckteilen 13,14 einen Griff 39 des Koffers 34 bilden.

Im Rahmen der Erfindung ist es als mitumfaßt zu betrachten, daß die Abdeckteile auch eine flache Kontur aufweisen können.

Auch können die Abdeckteile 13,14 anstelle mit Verbindungsgliedern 32,33 mit jeweils einem vorzugsweise im Bereich der Schwenkachsen 17,18 angeordneten Federsystem in die Be- und Entladestellung nach oben verschwenkt werden.

## Patentansprüche

1. Laderaumabdeckung für den Laderaum (11) eines Kraftfahrzeuges, insbesondere eines Kombinationskraftwagens, mit wenigstens einem eigensteifen, zur Bildung einer Gepäckablage im Anschluß hinter einer Rückenlehne (24) und ungefähr auf Höhe einer Bordkante (42) angeordneten Abdeckelement (12), das in seiner etwa horizontalen und zum Laderaumboden etwa parallelen Abdeckstellung den Laderaum (11) von der Fahrgastzelle (30) abtrennt und aus der Abdeckstellung um eine Schwenkachse (17;18) in eine Entladestellung nach oben verschwenkbar ist,
**dadurch gekennzeichnet,**
**daß** sich die Schwenkachse (17;18) etwa in Fahrzeuglängsrichtung erstreckt und daß das Abdeckelement (12) in Richtung einer zugeordneten Fahrzeugseitenwand (16) verschwenkbar ist.

2. Laderaumabdeckung nach Anspruch 1,
**dadurch gekennzeichnet,**
**daß** die Schwenkachse (17;18) nahe der Fahrzeugaußenseite (16) verläuft.

3. Laderaumabdeckung nach Anspruch 1,
**dadurch gekennzeichnet,**
**daß** das Abdeckelement (12) zwei entlang eines Trennfalzes (31) voneinander getrennte Abdeckteile (13,14) umfaßt, wobei jedem Abdeckteil (13,14) eine sich etwa in Fahrzeuglängsrichtung erstreckende Schwenkachse (17,18) zugeordnet ist.

4. Laderaumabdeckung nach Anspruch 3,
**dadurch gekennzeichnet,**
**daß** der Trennfalz (31) etwa fahrzeugmittig und etwa in Fahrzeuglängsrichtung verläuft.

5. Laderaumabdeckung nach Anspruch 3,
**dadurch gekennzeichnet,**
**daß** die beiden Schwenkachsen (17,18) nahe der zugeordneten Fahrzeugaußenseite (16) verlaufen.

6. Laderaumabdeckung nach Anspruch 3,
**dadurch gekennzeichnet,**
**daß** die Abdeckteile (13,14) mit Hilfe von lösbaren Scharnieren (19) um die Schwenkachsen (17,18) verschwenkbar sind.

7. Laderaumabdeckung nach Anspruch 3,
**dadurch gekennzeichnet,**
**daß** die Abdeckteile (13,14) mit jeweils einem Verbindungsglied (32,33) mit der Hecktüre (10) verbunden und beim Öffnen der Hecktüre (10) in die Entladestellung nach oben verschwenkbar sind.

8. Laderaumabdeckung nach Anspruch 3,
**dadurch gekennzeichnet,**
**daß** die Abdeckteile (13,14) mit jeweils einem vorzugsweise im Bereich der Schwenkachsen (17;18) angeordneten Federsystem in die Be- und Entladestellung nach oben verschwenkbar sind.

9. Laderaumabdeckung nach Anspruch 3,
**dadurch gekennzeichnet,**
**daß** die Abdeckteile (13,14) schalenförmig ausgebildet und so aneinander angepaßt sind, daß sie zu einem tragbaren Koffer (34) zusammenfügbar sind.

10. Laderaumabdeckung nach Anspruch 9,
**dadurch gekennzeichnet,**
**daß** die den Abdeckteilen (13,14) zugeordneten Scharnierhälften (19.1) derart ausgebildet und an den Abdeckteilen (13,14) angeordnet sind, daß sie die Scharniere des Koffers (34) bilden.

## Claims

1. Loading area cover for the loading area (11) of a motor vehicle, in particular a combination car, with at least one intrinsically rigid covering element (12) arranged to form a luggage area connecting behind the seatback (24) and approximately at the height of an edge (42), wherein this covering element (12) in its approximately horizontal covering position and approximately parallel to the floor of the loading area separates the loading area (11) from the passenger cell (30) and can be pivoted upwards around a pivot axis (17; 18) out of the covering position into an unloading position,
**characterised in that**
the pivot axis (17; 18) extends approximately in the vehicle longitudinal direction and that the covering element (12) can be pivoted in the direction of an associated vehicle side wall (16).

2. Loading area cover according to claim 1
**characterised in that**
the pivot axis (17; 18) runs near the vehicle outer side (16).

3. Loading area cover according to claim 1
**characterised in that**
the covering element (12) has two covering components separated from each other along a separating seam wherein a pivot axis (17, 18) extending approximately in the vehicle longitudinal direction is assigned to each covering component (13, 14).

4. Loading area cover according to claim 3
**characterised in that**
the separating seam (31) runs approximately in the centre of the vehicle and approximately in the vehicle longitudinal direction.

5. Loading area cover according to claim 3
**characterised in that**
the two pivot axes (17, 18) run near the associated vehicle outer side (16).

6. Loading area cover according to claim 3
**characterised in that**
the covering components (13, 14) can be pivoted around the pivot axes (17, 18) with the aid of detachable hinges (19).

7. Loading area cover according to claim 3
**characterised in that**
the covering components (13, 14) with a connecting member (32, 33) each are connected with the rear door (10) and upon opening of the rear door (10) can be pivoted upwards into the unloading position.

8. Loading area cover according to claim 3
**characterised in that**
the covering components (13, 14) respectively with a spring system arranged preferably in the area of the pivot axes (17; 18) can be pivoted upwards into the loading and unloading position.

9. Loading area cover according to claim 3
**characterised in that**
the covering components (13, 14) are formed as shells and adapted to each other in such a way that they can be joined together to form a portable case (34).

10. Loading area cover according to claim 9
**characterised in that**
the hinge halve components (13, 14) are formed and arranged on the covering components (13, 14) in such a way that they form the hinges of the trunk (34).

## Revendications

1. Couvercle pour le compartiment à bagages (11) d'un véhicule motorisé, en particulier d'un véhicule du type break, comportant au moins un élément de couverture (12) qui est rigide en soi, qui est disposé pour former une tablette à bagages au raccordement derrière un dossier arrière (24) et à peu près au niveau d'une bordure (42), qui, dans sa position de couverture à peu près horizontale et à peu près parallèle au plancher du compartiment à bagages, sépare le compartiment à bagages (11) d'avec l'habitacle (30) et qui, depuis la position de couverture, peut pivoter vers le haut autour d'un axe de pivotement (17; 18) pour venir dans une position de déchargement, **caractérisé par le fait que** l'axe de pivotement (17 ; 18) s'étend à peu près selon la direction longitudinale du véhicule et que l'élément de couverture (12) peut pivoter en direction d'une paroi latérale associée (16) du véhicule.

2. Couvercle pour le compartiment à bagages selon la revendication 1, **caractérisé par le fait que** l'axe de pivotement (17;18) passe près de la face extérieure (16) du véhicule.

3. Couvercle pour le compartiment à bagages selon la revendication 1, **caractérisé par le fait que** l'élément de couverture (12) comporte deux pièces de couverture (13, 14) qui sont séparées l'une de l'autre le long d'une rainure de séparation (31), un axe de pivotement (17, 18) s'étendant à peu près selon la direction longitudinale du véhicule étant associé à chaque portion de couverture (13, 14).

4. Couvercle pour le compartiment à bagages selon la revendication 3, **caractérisé par le fait que** la rainure de séparation (31) passe à peu près au centre du véhicule et à peu près selon la direction longitudinale du véhicule.

5. Couvercle pour le compartiment à bagages selon la revendication 3, **caractérisé par le fait que** les deux axes de pivotement (17, 18) passent près de la face extérieure associée (16) du véhicule.

6. Couvercle pour le compartiment à bagages selon la revendication 3, **caractérisé par le fait que** les pièces de couverture peuvent pivoter autour des axes de pivotement (17, 18) à l'aide de charnières détachables (19).

7. Couvercle pour le compartiment à bagages selon la revendication 3, **caractérisé par le fait que** les pièces de couverture (13, 14) sont reliées, chacune par une pièce de liaison, à la porte arrière (10) et, lors de l'ouverture de la porte arrière (10), peuvent pivoter vers le haut pour venir en position de déchargement.

8. Couvercle pour le compartiment à bagages selon la revendication 3, **caractérisé par le fait que** les pièces de couverture (13, 14) peuvent pivoter vers le haut pour venir en position de chargement et de déchargement au moyen de chacune un système à ressort disposé de préférence dans la zone des axes de pivotement (17 ; 18).

9. Couvercle pour le compartiment à bagages selon la revendication 3, **caractérisé par le fait que** les pièces de couverture (13, 14) sont conçues en forme de coque et adaptées l'une à l'autre de façon à pouvoir s'assembler pour former un coffre portable (34).

10. Couvercle pour le compartiment à bagages selon la revendication 9, **caractérisé par le fait que** les demi-chamières (19.1) associées aux pièces de couverture (13, 14) sont conçues et disposées sur les pièces de couverture (13, 14) de façon à former une charnière du coffre (34).
